# EUROPEAN PATENT APPLICATION

(11) **EP 3 925 831 A1**
(43) Date of publication of application: **22.12.2021**
(21) Application number: 21180464.6
(22) Date of filing: 18.06.2021
(51) Int. Cl.: B60R 13/00, B60Q 1/26

(54) **ILLUMINATED EMBLEM ASSEMBLY WITH IMPROVED HOMOGENEITY**

(30) Priority: 19.06.2020 ES 202030603
(71) Applicant: SRG Global Liria, S.L., 46160 Liria Valencia (ES)
(72) Inventor: PILES GUILLEM, Sergio, 46160 LIRIA, VALENCIA (ES); ESCRIBÁ, Antonio, 46160 LIRIA, VALENCIA (ES); MONLEÓN, Juan, 46160 LIRIA, VALENCIA (ES); BEST, Robin, 46160 LIRIA, VALENCIA (ES); EARDLEY, Christopher, 46160 LIRIA, VALENCIA (ES); BIHIS, Emilyn, 46160 LIRIA, VALENCIA (ES)
(74) Representative: Hoyng Rokh Monegier B.V.

(57) **Abstract**

An illuminated emblem assembly (10) with improved homogeneity includes an emblem body (22) comprising emblem edges (46, 48), a housing (12) comprising a chamber (44), a light source (14) positioned at a second end of the chamber, and a light guide (18) positioned over a housing aperture, the light guide having a proximal side (86) facing the emblem body and a distal side (88) facing the light source. Light enters the light guide through a housing-side entry surface (32) disposed on the distal side. A first exit surface (36) is defined by a first proximal edge (56) of the proximal side and a first distal edge (66) of the distal side. A second exit surface (38) is defined by a second proximal edge (58) and a second distal edge (68). The illuminated emblem assembly includes a reflector (20) that directs light exiting a reflector-side transmissive surface (34) of the light guide back through and toward the first exit surface and the second exit surface.

## Description

### TECHNICAL FIELD

This disclosure relates to illuminated displays, more specifically to illuminated emblem assemblies.

### DESCRIPTION OF RELATED ART

Emblems are used to display branding information or other logos on products, such as but not limited to vehicles. Illumination of an emblem may enhance the visual appearance of an emblem, illuminate the emblem in dark conditions, and/or otherwise draw attention to the emblem. Typical light sources generate light that radiates outwards from the light source. However, a radial illumination pattern may not be desired when the light source is used to illuminate an emblem.

Document DE102017214129A1 discloses an emblem for a vehicle which can be illuminated and is additionally equipped with radar functionality. The emblem comprises a surface light guide which is arranged in a housing and can be fed with light from a LED. The light can be decoupled from a coupling-out side of the light guide in the direction of a lens, the lens closing the housing towards the outside. An element with opaque and translucent areas, which forms the emblem visible to the outside, is arrange between the lens and the surface light guide. The backlighting of this element in the area of the translucent areas results in a light emblem on the outside.

An illuminated emblem assembly with improved homogeneity is desired.

### SUMMARY

The appended claims may serve as a summary of the invention.

### BRIEF DESCRIPTION OF THE DRAWINGS

The present invention is illustrated by way of example and not limited in the accompanying figures in which like reference numerals indicate similar elements and in which:
FIG. 1 is a sectional side view of a portion of an illuminated emblem assembly in an example embodiment;
FIG. 2 is a sectional side view of a portion of an illuminated emblem assembly in an example embodiment.

While each of the drawing figures illustrates a particular embodiment for purposes of illustrating a clear example, other embodiments may omit, add to, reorder, or modify any of the elements shown in the drawing figures. For purposes of illustrating clear examples, one or more figures may be described with reference to one or more other figures. However, using the particular arrangement illustrated in the one or more other figures is not required in other embodiments.

### DETAILED DESCRIPTION

In the following description, for the purpose of explanation, numerous specific details are set forth in order to provide a thorough understanding of the present invention. It will be apparent, however, that the present invention may be practiced without these specific details. The detailed description that follows describes exemplary embodiments and the features disclosed are not intended to be limited to the expressly disclosed combination(s). Therefore, unless otherwise noted, features disclosed herein may be combined to form additional combinations that were not otherwise shown for purposes of brevity.

It will be further understood that: the term "or" may be inclusive or exclusive unless expressly stated otherwise; the term "set" may comprise zero, one, or two or more elements; the terms "first", "second", "certain", and "particular" are used as naming conventions to distinguish elements from each other does not imply an ordering, timing, or any other characteristic of the referenced items unless otherwise specified; the term "and/or" as used herein refers to and encompasses any and all possible combinations of one or more of the associated listed items; that the terms "comprises" and/or "comprising" specify the presence of stated features, but do not preclude the presence or addition of one or more other features. The detailed description that follows describes exemplary embodiments and the features disclosed are not intended to be limited to the expressly disclosed combination(s). Therefore, unless otherwise noted, features disclosed herein may be combined to form additional combinations that were not otherwise shown for purposes of brevity.

### GENERAL OVERVIEW

This document generally describes systems, methods, devices, and other techniques for illuminated emblem assemblies with improved homogeneity. The distribution of light from a light source is directed within a light guide to provide even light splitting and uniform light distribution to illuminate an emblem.

One or more embodiments described herein are directed to an illuminated emblem assembly. The illuminated emblem assembly includes an emblem body comprising emblem edges, a housing comprising a chamber with a housing aperture at a first end of the chamber, a light source positioned at a second end of the chamber, and a light guide positioned over the housing aperture. The light guide has a proximal side facing the emblem body, and a distal side facing the light source. A housing-side entry surface is disposed on the distal side of the light guide where light generated by the light source enters the light guide. A first exit surface is disposed on the light guide, the first exit surface defined by a first proximal edge of the proximal side of the light guide and a first distal edge of the distal side of the light guide. A second exit surface is disposed on the light guide across from the first exit surface, the second exit surface defined by a second proximal edge of the proximal side of the light guide and a second distal edge of the distal side of the light guide. A reflector-side transmissive surface is disposed on the proximal side of the light guide. The illuminated emblem assembly includes a reflector that directs light exiting the reflector-side transmissive surface back through the reflector-side transmissive surface and toward the first exit surface and the second exit surface.

In some implementations, the various techniques described herein may achieve one or more of the following advantages: even distribution of light at the edges of an emblem; balanced or controlled illuminance with good homogeneity; achieving such advantages using a wider range of transparent light guide materials; and more cost-effective manufacturing of illuminated emblem assemblies and other displays. Additional features and advantages are apparent from the specification and the drawings.

### ILLUMINATED EMBLEM ASSEMBLY OVERVIEW

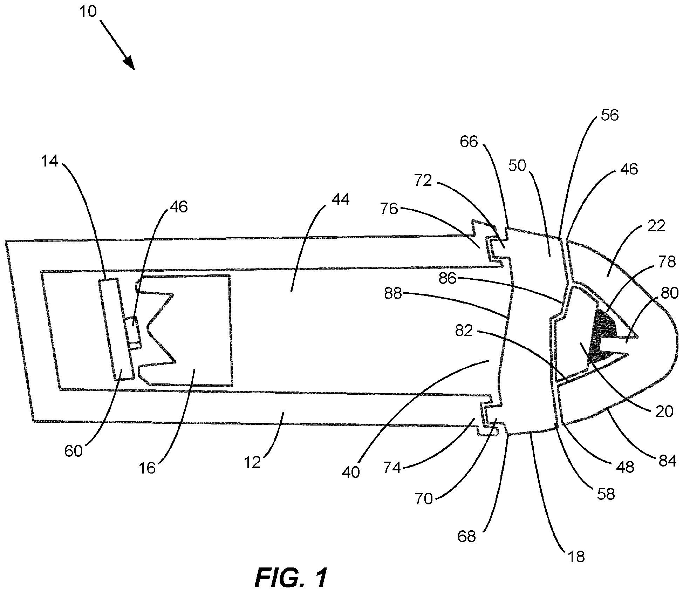

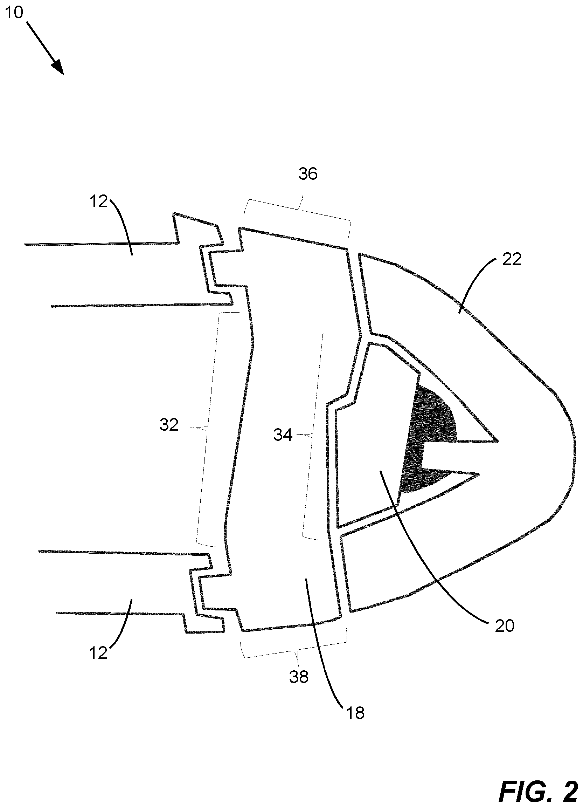

FIGS. 1-2 are sectional side views of portions of an illuminated emblem assembly in an example embodiment. An illuminated emblem assembly 10 may create an even, diffuse backlighting effect for an emblem.

The illuminated emblem assembly 10 includes an emblem body 22. The emblem body 22 is a component that represents a logo, a brand, a sign, or other symbol. For example, the emblem body 22 may be a representation of an emblem of an automobile manufacturer. The emblem body 22 has an exterior surface 84 that is visible when the illuminated emblem assembly 10 is assembled. The emblem body 22 has an interior surface 82 that is hidden when the illuminated emblem assembly 10 is assembled.

In some embodiments, the emblem body 22 is formed as a shell with a substantially hollow interior. The emblem body 22 forms a shape that is defined by emblem edges 46-48. While two emblem edges 46-48 are illustrated, the number of emblem edges depends on the shape of the emblem body 22. In some embodiments, the emblem edges 46-48 lie substantially within a plane and form an outline of the emblem within the plane.

The emblem body 22 may be formed from one or more materials, such as one or more metals, plastics, composites, and/or other materials. In some embodiments, the emblem body 22 is electroplated to deposit a thin coherent metal coating over its exterior surface 84, such as but not limited to chrome plating. The emblem body 22 may include one or multiple emblem body components made using one or more manufacturing techniques such as but not limited to die casting, forming, stamping, machining, injection molding, and/or other manufacturing processes. When the emblem body 22 is made of multiple emblem body components, the multiple emblem body components may be joined using adhesives, welding, fasteners, friction fit, and/or other assembly processes.

The illuminated emblem assembly 10 includes a housing 12. The housing contains electronic and optical components, such as but not limited to the components described hereinafter. The housing 12 may include one or multiple housing components made using one or more manufacturing techniques such as but not limited to die casting, forming, stamping, machining, injection molding, and/or other manufacturing processes. When the housing 12 is made of multiple housing components, the multiple housing components may be joined using adhesives, welding, fasteners, friction fit, and/or other assembly processes.

In some embodiments, the illuminated emblem assembly 10 is configured for mounting to a vehicle, such as but not limited to a vehicle grille, a vehicle front, a vehicle rear, a vehicle interior, and the like. The housing 12 may be formed with one or more fastening components to mount the illuminated emblem assembly 10 in place, such as but not limited to slides, recesses, holes, slots, guides, pegs, snaps and/or other fastening components.

### LIGHT SOURCE

The illuminated emblem assembly 10 includes a light source 14. The light source 14 generates light to illuminate the emblem body 22. Light generated at the light source 14 exits housing 12 through a housing aperture 40. The light source 14 is mounted within the housing 12. The light source 14 may be mounted within the housing 12 using one or more assembly techniques, such as but not limited to adhesives, welding, fasteners, friction fit, and/or other assembly processes. In some embodiments, the housing includes one or more fastener components configured to receive the light source 14.

The light source 14 may include one or multiple light-emitting components 46, such as one or more light-emitting diodes (LEDs). For example, the light source 14 may include one or more tri-color red green blue (RGB) LED capable of emitting red light, green light, blue light, and/or combinations thereof in varying intensities to generate a range of colors of light with a variable spectrum. Alternatively and/or in addition, the light source 14 may include one or more single-color LEDs that emit near-monochromatic light of a relatively fixed spectrum. In some embodiments, the light source 14 may include one or more non-LED light sources, such as one or more incandescent bulbs, compact fluorescent lamp (CFL) bulbs, or the like. The light source 14 may be disposed on a printed circuit board (PCB) 60 that includes power and/or control circuitry for the light source 14.

In some embodiments, the light source 14 is positioned such that the light source 14 generates light in a direction facing the housing aperture 40. For example, the light source 14 may be mounted at a first end of a chamber 44 within the housing 12, and the housing aperture 40 may be disposed at a second end of the chamber 44. The housing 12 may include one chamber 44 or multiple chambers 44, which may each contain one or more light-emitting components 46 of the light source 14.

The light source 14 may be coupled to a light control system. For example, the light control system may include a printed circuit board (PCB) containing drivers, controllers, and/or circuitry that supply power and/or control signals for powering and/or controlling the light source 14. The light control system may control the light based on a state of a vehicle, ambient lighting conditions, user preferences, and/or other conditions. In some embodiments, the light control system is mounted within the housing 12. For example, one or more PCBs 60 may be mounted within the housing 12. Alternatively and/or in addition, the light control system may be external to the housing 12 and/or separate from the illuminated emblem assembly 10. In some embodiments, the light control assembly 10 includes one or more wires and/or other electrical contacts that electronically couple the light source 14 to an external light control system. A light control system may have components that are contained within the housing 12, components that are external to the housing 12, or a combination thereof.

### COLLIMATION

In some embodiments, the illuminated emblem assembly 10 includes a collimator 16. The collimator 16 narrows and/or aligns a beam of light, causing rays of light emitted from the light source 14 to become more aligned in a direction toward the housing aperture 40. The collimator 16 may collimate the light emitted by the light source 14 before the light exits the housing aperture 40 and enters the light guide 18 through the housing-side entry surface 32 of the light guide 18. The light rays traveling down the chamber 44 may become more parallel after passing through the collimator 16. The collimator 16 may include one or more reflectors, lenses, prisms, collimating surfaces, and/or other components capable of collimating light from the light source 14. The collimator may be made of metal, plastic, and/or other materials.

The collimator 16 may be mounted within the housing 12 using one or more assembly techniques, such as but not limited to adhesives, welding, fasteners, friction fit, and/or other assembly processes. In some embodiments, the housing 12 includes one or more fastening components configured to receive the collimator 16, such as but not limited to slides, recesses, holes, slots, guides, pegs, snaps and/or other fastening components. The collimator 16 may include one or more fastening components configured to mate with the housing 12. The illuminated light assembly 10 may include one or multiple collimators 16.

### LIGHT GUIDE

The illuminated emblem assembly 10 includes a light guide 18 positioned over the housing aperture 40. The light guide 18 distributes light that enters the light guide 18 from the housing-side entry surface 32. The light guide 18 is made of a transparent material that allows light to pass through the material. In some embodiments, the light guide 18 is made of polycarbonate, acrylic, or another transparent material.

The light guide 18 may be shaped based on a shape of the emblem body 22. A portion of the light guide 18 is covered by the emblem body 22. A proximal side 86 of the light guide 18 faces the emblem body 22. The proximal side 86 of the light guide 18 is defined by one or more proximal edges 56-58 of the light guide 18. In some embodiments, the proximal edges 56-58 lie substantially within a plane and form an outline of the emblem within the plane. The outline of the emblem formed by the proximal edges 56-58 (at the proximal side 86 of the light guide 18) may be the same size or wider than the outline of the emblem formed by the emblem edges 46-48.

A distal side 88 of the light guide 18 faces the light source 14. The distal side 88 of the light guide 18 is further from the emblem body 22 than the proximal side 86 of the light guide 18. Collimated light generated at the light source 14 and collimated by the collimator 16 may travel through the chamber 44, exit the chamber from the housing aperture 40, and enter the light guide 18 at the housing-side entry surface 32. The housing-side entry surface 32 is disposed on the distal side 88 of the light guide 18.

The distal side 88 of the light guide 18 is defined by one or more distal edges 66-68 of the light guide 22. The number of proximal edges 56-58 and distal edges 66-68 may depend on the shape of the light guide 18 and/or the shape of the emblem body 22. In some embodiments, the distal edges 66-68 lie substantially within a plane and form an outline of the emblem within the plane. The outline of the emblem formed by the distal edges 66-68 (at the distal side 88 of the light guide 18) may be the same size or wider than the outline of the emblem formed by the emblem edges 46-48 and/or the outline of the emblem formed by the proximal edges 56-58 (at the proximal side 86 of the light guide 18).

The proximal edges 56-58 of the light guide 18 are positioned adjacent to the emblem body 22. In some embodiments, one or more proximal edges 56-58 of the light guide 18 follow one or more emblem edges 46-48. In some embodiments, one or more proximal edges 56-58 of the light guide 18 are flush with the corresponding emblem edges 46-48 when the illuminated emblem assembly 10 is assembled. Alternatively and/or in addition, one or more proximal edges 56-58 of the light guide 18 may protrude from the corresponding emblem edges 46-48 when the illustrated emblem assembly 10 is assembled.

One or more distal edges 66-68 of the light guide 18 may follow one or more emblem edges 46-48. In some embodiments, one or more distal edges 66-68 of the light guide 18 are flush with the corresponding emblem edges 46-48 when the illuminated emblem assembly 10 is assembled. Alternatively and/or in addition, one or more distal edges 66-68 of the light guide 18 may protrude from the corresponding emblem edges 46-48 when the illustrated emblem assembly 10 is assembled.

An interior 50 of the light guide 18 is transmissive such that light entering the housing-side entry surface 32 is transmitted through the interior 50. In some embodiments, the light guide 18 is formed from a non-diffusive material that allows light to travel through the interior 50 with minimal diffusion caused by the material of the interior 50. Diffusion is the result of repeated random scattering. A diffusive material scatters light when light travels through the material based on the properties of the material.

The light guide 18 may include one or multiple light guide components. For example, when an emblem body 22 includes two or more non-contiguous emblem body components that are separated by a sufficient distance, the light guide 18 may include two or more light guide components. The two or more light guide components may be manufactured as one or multiple pieces. For example, two light guide components may be made as a single piece with an opaque section that functionally turns the single piece into two light guide components. The opaque section may be made opaque by applying an opaque covering, using an opaque material, or other techniques to achieve opacity.

The light guide 18 has one or more exit surfaces 36-38. , Light that enters the light guide 18 eventually exits the light guide 18 at the exit surfaces 36-38. Each exit surface 36-38 is defined by a proximal edge 56-58 and a distal edge 66-68 of the light guide 18.

In some embodiments (as illustrated), the distal side 88 of the light guide 18 facing away from the emblem body 22 is wider than the proximal side 86 of the light guide 18 facing the emblem body 22. In this embodiment, the proximal edges 56-58 of the light guide 18 are flush with the emblem edges 46-48 of the emblem body 22, and the distal edges 66-68 of the light guide 18 protrude from the corresponding emblem edges 46-48 such that the exit surfaces 36-38 are visible from a front view of the illuminated emblem assembly 10. In the front view of this embodiment of the illuminated emblem assembly 10, the exit surfaces 36-38 appear to outline the emblem body 22. In this embodiment, the exit surfaces 36-38 are tilted toward the front of the emblem body 22 and project laterally beyond the emblem edges 46-48.

The light guide 18 may be coupled with the housing 12 using one or more assembly techniques, such as but not limited to adhesives, welding, fasteners, friction fit, and/or other assembly processes. In some embodiments, the light guide 18 and/or the housing 12 includes one or more fastening components 70-76 configured to couple the housing 12 and the light guide 18, such as but not limited to slides, recesses, holes, slots, guides, pegs, snaps and/or other fastening components. For example, as illustrated, the light guide 18 includes a first protrusion 72 near a first distal edge 66 of the light guide 18 that mates with a first recess 76 of the housing 12, and a second protrusion 70 near a second distal edge 68 of the light guide 18 that mates with a second recess 74 of the housing 12.

### REFLECTOR

The illuminated emblem assembly 10 includes a reflector 20. The reflector 20 reflects light that exits the reflector-side transmissive surface 34 back through the reflector-side transmissive surface 34. The reflector-side transmissive surface 34 is disposed on the proximal side 86 of the light guide 18. The illuminated light assembly 10 may include one or multiple reflectors 20. The reflector 20 may include one or more flat and/or curved reflecting surfaces that are configured to reflect light exiting the reflector-side transmissive surface 34 in a desired manner. The shape and/or position of the reflector 20 may depend on a shape of the emblem body 22. The reflector 20 may either fully or partially cover the reflector-side transmissive surface 34.

In some embodiments, the reflector 20 may be shaped and/or positioned to direct incident light toward two or more exit surfaces (e.g. exit surface 36 and exit surface 38) in a desired proportion. For example, the reflector 20 may be configured to reflect about 50% of incident light toward exit surface 36 and about 50% of incident light toward exit surface 38. In some embodiments, the reflector 20 is positioned and/or shaped with an assumption that light from the light source 14 that exits the housing aperture 40, and exits the reflector-side transmissive surface 34 is substantially collimated by the collimator 16. The light returned from the reflector 20 is split in the desired proportion toward exit surface 36 and exit surface 38.

In some embodiments, the reflector 20 splits the light approximately perpendicular to the source optical axis of the collimated light entering the light guide 18. A geometry of the reflector 20 at a particular position may be adapted to account for any difference in distance between exit points on the two or more exit surfaces 36-38 and the particular position.

The reflector 20 may be positioned between the emblem body 22 and the light guide 18 using one or more assembly techniques, such as but not limited to adhesives, welding, fasteners, friction fit, and/or other assembly processes. For example, in the illustrated embodiment, the reflector 20 is coupled with a protrusion 80 extending from the interior surface 82 of the emblem body 22 using an adhesive 78.

In some embodiments, the reflector 20 is held in place between the light guide 18 and the emblem body 22. The emblem body 22 and the light guide 18 may be coupled using one or more assembly techniques, such as but not limited to adhesives, welding, fasteners, friction fit, and/or other assembly processes. In some embodiments, the light guide 18 and/or emblem body 22 includes one or more fastening components configured to couple the light guide 18 and the emblem body 22, such as but not limited to slides, recesses, holes, slots, guides, pegs, snaps and/or other fastening components.

In some embodiments, the reflector 20 is integrated with the light guide 18. For example, the reflector 20 may be coupled with the reflector-side transmissive surface 34 of the light guide 18. In some embodiments, the reflector-side transmissive surface 34 of the light guide 18 is formed in the desired shape of the reflector 20, and the reflector 20 is added to the light guide 18 by adding a reflective coating to the reflector-side transmissive surface 34 of the light guide 18.

### SURFACE TEXTURING/DIFFUSION TECHNIQUES

In some embodiments, the illuminated emblem assembly 10 uses diffusion techniques to additionally scatter light. Diffusion techniques may increase the homogeneity of light exiting the exit surfaces 36-38 to for a more uniform illumination effect of the emblem body 22.

In some embodiments, one or more exit surfaces 36-38 are fully or partially textured over the respective surface. A textured surface may be achieved by sanding, grinding, abrading, etching, or otherwise applying a texture to a surface. The exit surfaces 36-38 may be textured in a manner that scatters light as the light exits the exit surfaces 36-38. Alternatively and/or in addition, a diffusive texture may be disposed on one or more other surfaces of the light guide 18, such as but not limited to the entry surface 32 and/or the reflector-side transmissive surface 34. In some embodiments, a diffusive texture may be disposed on one or more other surfaces of the illuminated emblem assembly 10, such as but not limited to one or more internal surfaces of the housing 12.

### OTHER ASPECTS OF DISCLOSURE

In the foregoing specification, embodiments are described with reference to specific details that may vary from implementation to implementation. Nevertheless, it will be understood that various modifications may be made without departing from the spirit and scope of the present disclosure. The examples set forth above are provided to those of ordinary skill in the art as a complete disclosure and description of how to make and use the embodiments of the disclosure, and are not intended to limit the scope of what the inventor/inventors regard as their disclosure. Modifications of the above-described modes for carrying out the methods and systems herein disclosed that are obvious to persons of skill in the art are intended to be within the scope of the present disclosure and the following claims. The sole and exclusive indicator of the scope of the disclosure, and what is intended by the applicants to be the scope of the disclosure, is the literal and equivalent scope of the set of claims that issue from this application, in the specific form in which such claims issue, including any subsequent correction.

## Claims

1. An illuminated emblem assembly (10) comprising:
an emblem body (22) comprising emblem edges (46,48);
a housing (12) comprising a chamber (44) with a housing aperture (40) at a first end of the chamber (44);
a light source (14) positioned at a second end of the chamber (44);
a light guide (18) positioned over the housing aperture (40), the light guide (18) comprising a proximal side (86) facing the emblem body (22), and a distal side (88) facing the light source (14);
a housing-side entry surface (32) disposed on the distal side (88) of the light guide (18) where light generated by the light source (14) enters the light guide (18);
a first exit surface (36) disposed on the light guide (18), the first exit surface (36) defined by a first proximal edge (56) of the proximal side (86) and a first distal edge (66) of the distal side (88);
a second exit surface (38) disposed on the light guide (18) across from the first exit surface (36), the second exit surface (38) defined by a second proximal edge (58) of the proximal side (86) and a second distal edge (68) of the distal side (88);
a reflector-side transmissive surface (34) disposed on the proximal side (86) of the light guide (18); and
a reflector (20) that directs light exiting the reflector-side transmissive surface (34) back through the reflector-side transmissive surface (34) and toward the first exit surface (36) and the second exit surface (36).

2. The illuminated emblem assembly (10) of claim 1, further comprising a collimator (16), positioned in the chamber (44) between the light source (14) and the housing aperture (40), that aligns light rays emitted from the light source (14).

3. The illuminated emblem assembly (10) of claim 1, wherein the first proximal edge (56) of the proximal side (86) of the light guide (18) is flush with a first emblem edge (46) of the emblem edges (46,48), and the second proximal edge (58) of the proximal side (86) of the light guide (18) is flush with a second emblem edge (48) of the emblem edges (46,48), preferably wherein the first distal edge (66) of the distal side (88) of the light guide (18) protrudes beyond the first emblem edge (46), and the second distal edge (68) of the distal side (88) of the light guide (18) protrudes beyond the second emblem edge (48).

4. The illuminated emblem assembly (10) of claim 1, wherein the first exit surface (36) and the second exit surface (38) are tilted toward the front of the emblem body (22) and project laterally beyond the emblem edges (46,48).

5. The illuminated emblem assembly (10) of claim 1, wherein the first exit surface (36) and the second exit surface (38) are parallel.

6. The illuminated emblem assembly (10) of claim 1, wherein the light guide (18) is made from a non-diffusive material.

7. The illuminated emblem assembly (10) of claim 1, wherein the reflector (20) splits about 50% of light that exits the reflector-side transmissive surface (34) toward the first exit surface (36) and about 50% of light that exits the reflector-side transmissive surface (34) toward the second exit surface (38).

8. The illuminated emblem assembly (10) of claim 1, wherein the reflector (20) is coupled with an interior surface of the emblem body (22), preferably wherein the reflector is coupled with a protrusion (80) on the interior surface of the emblem body (22) using an adhesive (78).

9. The illuminated emblem assembly (10) of claim 8, wherein the emblem body (22) is coupled with the light guide (18).

10. The illuminated emblem assembly (10) of claim 1, wherein at least a portion of the first exit surface (36) and at least a portion of the second exit surface (38) is textured.

11. The illuminated emblem assembly (10) of claim 1, wherein at least a portion of the housing-side entry surface (32) is textured, and/or wherein at least a portion of the reflector-side transmissive surface (34) is textured.

12. The illuminated emblem assembly (10) of claim 1, wherein at least a portion of an internal surface of the housing (12) is textured.

13. The illuminated emblem assembly (10) of claim 1, wherein the proximal side (86) of the light guide (18) is formed in the shape of the reflector (20), and the reflector (20) comprises a reflective coating applied to the proximal side (86) of the light guide (18).

14. The illuminated emblem assembly (10) of claim 1, wherein the light source (14) comprises one or more light-emitting diodes (LEDs).

15. The illuminated emblem assembly (10) of claim 1, wherein:
the emblem edges (46,48) lie substantially within a first plane and form an outline of an emblem within the first plane;
a plurality of proximal edges (56,58) of the light guide (18) comprising the first proximal edge (56) and the second proximal edge (58) lie substantially within a second plane and form an outline of the emblem within the second plane; and
a plurality of distal edges (66,68) of the light guide (18) comprising the first distal edge (66) and the second distal edge (68) lie substantially within a third plane and form an outline of the emblem within the third plane.
